Europäisches Patentamt

European Patent Office

Office européen des brevets

(11) Veröffentlichungsnummer: **0 255 592**
**A2**

(12) **EUROPÄISCHE PATENTANMELDUNG**

(21) Anmeldenummer: **87108886.0**

(51) Int. Cl.⁴: **B60B 33/00** , B60B 5/02

(22) Anmeldetag: **22.06.87**

(30) Priorität: **02.08.86 DE 3626246**

(43) Veröffentlichungstag der Anmeldung:
**10.02.88 Patentblatt 88/06**

(84) Benannte Vertragsstaaten:
**AT BE CH DE ES FR GB GR IT LI LU NL SE**

(71) Anmelder: **TENTE-ROLLEN GmbH & Co.**
**Herlinghausen 75**
**D-5632 Wermelskirchen 1(DE)**

(72) Erfinder: **Hodrius, Norbert**
**Vohwinkeler Allee 37**
**D-4000 Düsseldorf 1(DE)**
Erfinder: **Cürlis, Dieter**
**Drosselweg 26**
**D-5632 Wermelskirchen 1(DE)**

(74) Vertreter: **Rieder, Hans-Joachim, Dr. et al**
**Corneliusstrasse 45 Postfach 11 04 51**
**D-5600 Wuppertal 11(DE)**

(54) **Laufrad für Rollen.**

(57) Die Erfindung betrifft ein Laufrad für Rollen, insbesondere Transportrollen von Betten, handverfahrbaren Wagen oder dergleichen, mit einem Felgenkörper (8) aus Kunststoff und einer auf die oberflächenprofilierte Mantelfläche des Felgenkörpers unter Wärmeeinfluß aufgebrachten Bereifung aus thermoplastischem Kautschuk oder dergleichen, und schlägt zur Erzielung einer dauerhaften Verbindung der laufradbildenden Komponenten vor, daß die Bereifung (3) anteilmäßig das Kunststoffmaterial des Felgenkörpers (2) enthält und die Oberflächenprofilierung der Mantelfläche als Rauhung (R) gestaltet ist in einer Graduierung derart, daß die Kautschuk-Aufbring-Wärme Scheitelbereiche der Rauhigkeitserhebungen (10) anlöst.

FIG. 6

## Laufrad für Rollen

Die Erfindung bezieht sich auf ein Laufrad für Rollen, insbesondere Transportrollen von Betten, handverfahrbaren Wagen oder dergleichen, mit einem Felgenkörper aus Kunststoff und einer auf die oberflächenprofilierte Mantelfläche des Felgenkörpers unter Wärmeeinfluß aufgebrachten Bereifung aus thermoplastischem Kautschuk oder dergleichen.

Ein Laufrad dieser Art ist durch die FR-PS 1.225.376 bekannt. Zur Verbesserung des mechanischen Verbunds beider Materialien weist der Felgenkörper in Umlaufrichtung liegende Längsrillen auf. Gemäß einer Variante bilden diese hinterschnittene Flanken. Im Grunde kann hier von einer gestuften Schwalbenschwanzprofilierung gesprochen werden. Die hieraus resultierende Überhöhung des Felgenbetts führt aber zu ungleichmäßigen Belastungen der aufgebrachten Bereifung mit entsprechend unterschiedlichem Polster-bzw. Walkeffekt, so daß die Zuordnungsfestigkeit der Bereifung schon nach kürzesten Einsatzzeiten nachläßt.

Aufgabe der Erfindung ist es, ein gattungsgemäßes Laufrad hinsichtlich einer dauerhaften Verbindung der beiden radbildenden Komponenten zu optimieren.

Gelöst ist diese Aufgabe durch die im Hauptanspruch angegebene Erfindung. Die Unteransprüche stellen vorteilhafte Weiterbildungen dar. Zufolge solcher Ausgestaltung läßt sich ohne ergänzenden Formschluß schon aus den verwendeten Materialien über Wärme ein inniger Materialverbund zwischen Bereifung und der Mantelfläche des sie tragenden Felgenkörpers erreichen. Selbst extreme Belastungen, wie sie beim Schwenken des Radkörpers auftreten, werden schadfrei, d. h. bestens toleriert. Ohne Kleber oder Dritt-Materialien ergibt sich eine Verbundübergangszone höchster Fertigkeit wegen der gleichen Materialien in beiden Teilen. Daneben erzielt man praktisch einen mechanischen Ineinandergriff der Materialien aufgrund der Rauhung entstehen in den Scheitelbreichen der Rauhigkeitserhebungen Vernetzungen bzw. Verankerungen der Materialkomponenten. Der Anlöseeffekt geht so weit, daß bei einem gewaltsamen Trennen, wie dies Versuche erkennen ließen, überwiegend das relativ härtere Material des Felgenkörpers als Trenn-bzw. Spaltgrenze auftritt. Jeglicher Schlupf der Bereifung ist so ausgeschlossen. Dabei bedarf es keiner besonders gestalteten Felgenprofilierung. Es kann das übliche gemuldete Felgenbett Verwendung finden ebenso wie ein völlig flacher Felgengrund, der hinsichtlich des Walkeffekts jeweils über die ganze Radbreite völlig gleiche Bedingungen hätte. Der Verbundeffekt beider Materialien dadurch, daß die Bereifung anteilig das Kunststoffmaterial des Felgenkörpers enthält, kombiniert sich mit dem Rauhigkeits-Auslöse-Effekt. Dem bspw. aus Polypropylen bestehenden Felgenkörper liegt gleichartiges Verbundmaterial homogen verteilt im Kautschukkörper gegenüber. Hieraus resultiert dann gerade in der Rauhigkeitszone eine genügend weit in die Tiefe gehende Verankerung. Auch heir genügt einfach die Aufbring-Wärme als Aktivator. Weiter bringt die Erfindung in Vorschlag, daß die Rauhung als querverlaufende Riefung gestaltet ist. Bei gegeneinanderliegender Querung ergibt sich eine Kreuzriefung (sogenannte Rändelung) mit entsprechend hoher Anzahl pyramidaler Rauhigkeitserhebungen, natürlich unter Anwendung einer entsprechenden Kerbtalstruktur. Bei einer solchen Rändelung beträgt die Tiefe etwa 7/10 mm. Eine erodierte Rauhung liegt bei einer mittleren Rauhtiefe von 25 My. Im Prinzip vereinigen die verwendeten Werkstoffe die Vorteile des elastischen Verhaltens vulkanischer Kautschuke mit den einfachen Verarbeitungsmethoden der Thermoplaste. Ein vorteilhafter Verfahrensschritt zur Herstellung von Laufrädern gemäß Anspruch 1 besteht erfindungsgemäß schließlich darin, daß der Felgenkörper in auf etwa 80° vorgewärmtem Zustand in die Spritzform eingebracht ist. Die Herstellung wird nicht nur beschleunigt; vielmehr schließt die vorherige Aufwärmung jegliche Beschlagbildung aus.

Der Gegenstand der Erfindung ist nachstehend anhand eines zeichnerisch veranschaulichten Ausführungsbeispieles näher erläutert. Es zeigt

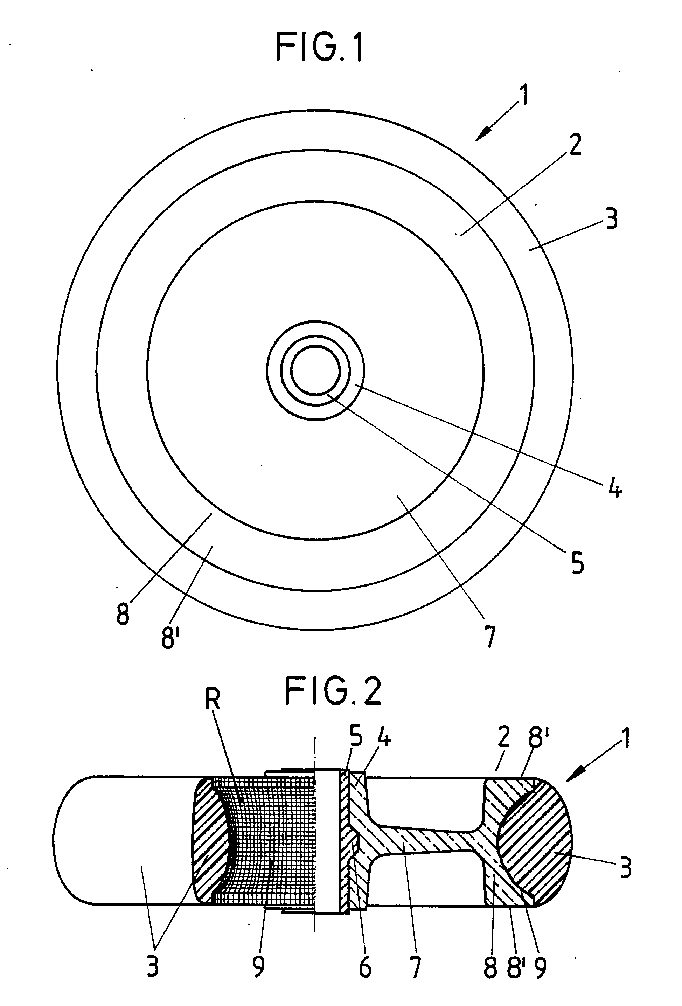

Fig. 1 das erfindungsgemäße Laufrad in Seitenansicht,

Fig. 2 die Draufsicht hierzu, im Halbschnitt bei linksseitig etwas zurückgeschnittener Bereifung zur Verdeutlichung der Rauhigkeitserhebungen im Felgenbett,

Fig. 3 den Felgenkörper zwischen den Spritzformhälften oder -backen einer Spritzeinrichtung vor dem Einbringen der bereifungsbildenden Kautschukmasse,

Fig. 4 eine entsprechende Darstellung mit lediglich strichpunktiert dargestellter Spritzeinrichtung, jedoch bei im Profil abgewandeltem Felgenkörper,

Fig. 5 einen peripheren sektoralen Schnittausschnitt des bereiften Felgenkörpers unter Verdeutlichung einer gewaltsamen Teilablösung der Bereifung und

Fig. 6 eine Herausvergrößerung dieser mit A bezeichneten Zone in Fig. 5.

Das dargestellte Laufrad 1 besteht aus einem Felgenkörper 2 und einer auf diesen aufgespritzten Bereifung 3.

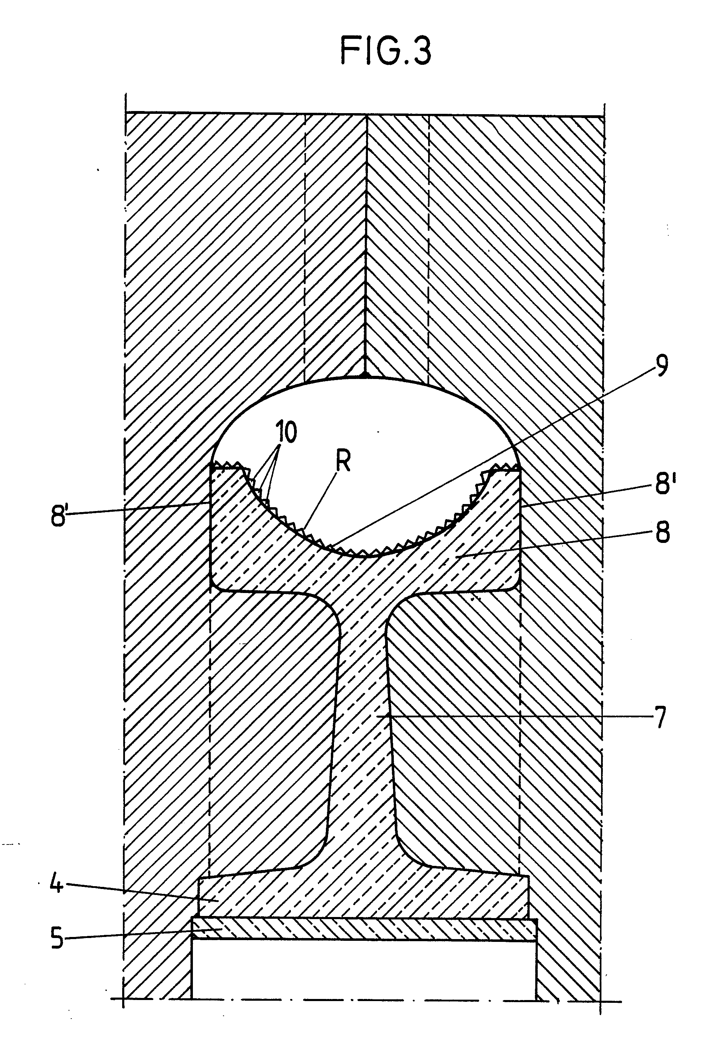

Der Felgenkörper 2 selbst ist aus Polypropylen-Kunststoff gespritzt. Er besitzt die übliche zentrale Nabe 4. Letztere kann mittels einer Hülse 5 aus gleitfreudigem Material ausgefüttert sein. Zur Erzielung einer axialen Sicherung derselben besteht Formschlußeingriff zwischen dieser und der Nabenhöhlung. Der entsprechende Vorsprung ergibt sich aus Fig. 2 und ist mit 6 bezeichnet. Die Hülse 5 wird dem Felgenkörper 2 beim Spritzvorgang einverleibt.

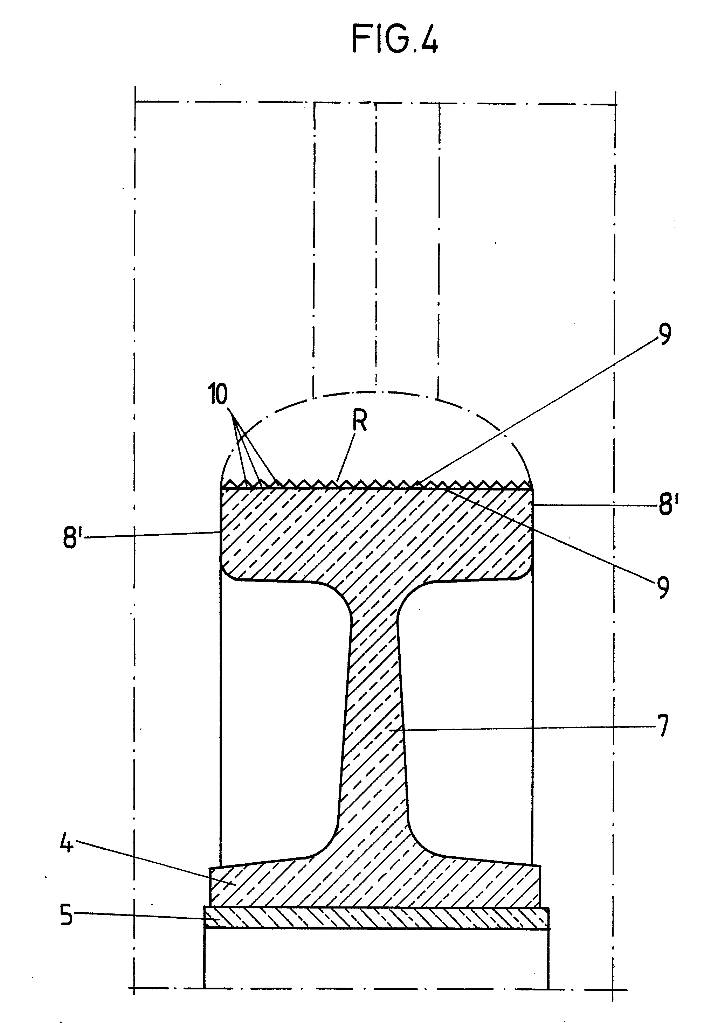

Die Nabe 4 geht außenseitig über einen symmetrischen Scheibensteg 7 in die Felge 8 über. Gemäß den Fig. 2 und 3 formt die Felge 8 ein konkaves Felgenbett 9; beim Ausführungsbeispiel Fig. 4 tritt das Felgenbett ungemuldet als zylindrische Mantelfläche auf. Auch dieses Felgenbett trägt das Bezugszeichen 9 und kann als Mantelfläche des Felgenkörpers bezeichnet werden.

Diese Mantelfläche des Felgenkörpers erhält in der in den Fig. 3 und 4 dargestellten Spritzeinrichtung die unter Wärmeeinfluß aufgebrachte Bereifung 3. Letztere besteht aus thermoplastischem Kautschuk. Die Mantelfläche besitzt eine Oberflächenprofilierung. Letztere ist als Rauhung R gestaltet in einer Graduierung derart, daß die Kautschuk-Aufbring-Wärme Scheitelbereiche der Rauhigkeitserhebungen 10 anlöst.

Beim Ausführungsbeispiel besteht die Rauhung R aus vielen kleinen Pyramiden, welche bspw. durch Kreuzriefung erzeugt sind. Der Kerbtalwinkel Alpha sowohl quer zum Felgenkörper 2 als auch in Umfangsrichtung des Felgenkörpers 2 beträgt 90°. Natürlich lassen sich auch steilere Flanken vorsehen, so daß die Pyramiden spitzer ausfallen. Die Rauhung R erstreckt sich von Felgenseite 8' zu Felgenseite 8' und folgt auch beim ersten Ausführungsbeispiel unterbrechungsfrei der konkaven Kontur des Felgenbettes 9.

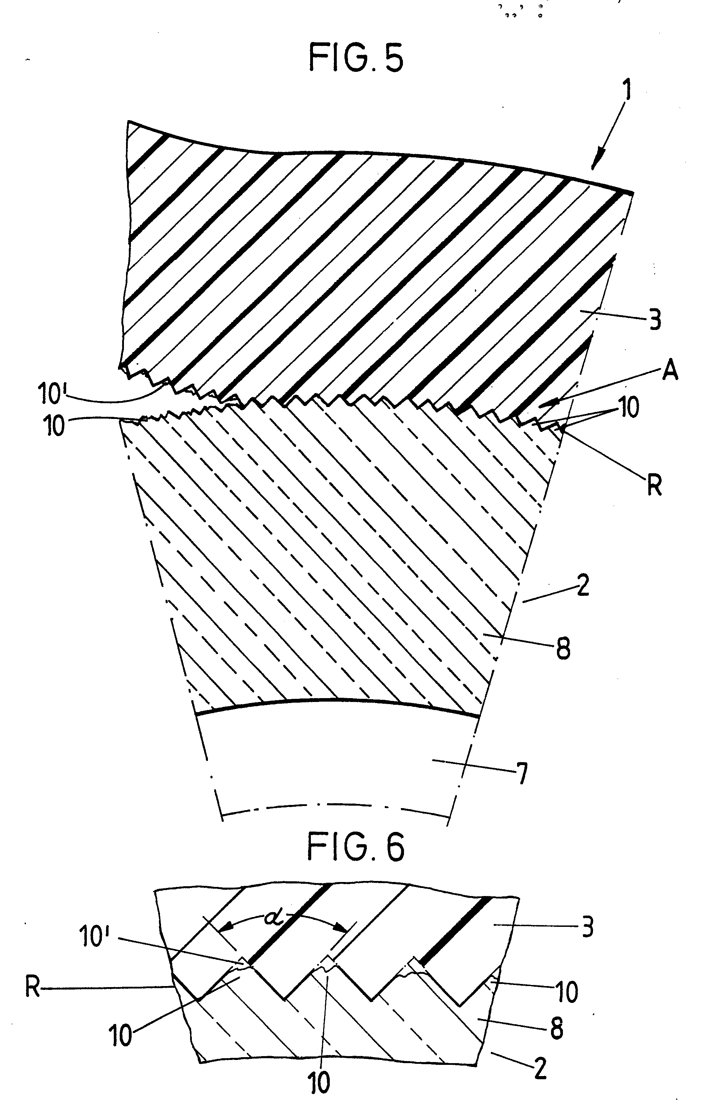

In Fig. 6 wird versucht, das Anlösen anschaulich grafisch darzustellen. Die Spitzen 10' der pyramidalen Rauhigkeitserhebungen 10 haben ihre Grundkontur verloren; ihr Material ist partiell in dem der Bereifung 3 aufgegangen. Die ursprüngliche Spitze läßt sich aus der strichpunktierten Linienart erkennen.

Ein gewaltsamer, erhebliche Kräfte erfordernder Trennversuch mit dem Ziel, die Bereifung 3 abzuziehen, führt dazu, daß die Trennlinie nicht, wie man normalerweise erwarten würde, alleine der Oberflächenkontur des härteren Felgenmateriales folgt, sondern durch die gerauhte Randzone hindurch, so daß Partien der felgenseitigen Rauhung, hier die Pyramidspitzen 10', herüberwandern, also am weicheren Material der Bereifung 3 haften.

Die Felgenkörperwärme beträgt ca. 80° C. Die Kautschuk-Aufbring-Wärme (ca. 220°) reicht für den entsprechenden Anlöseprozeß zur Erzielung der gewünschten guten Verankerung.

Erhöht ist diese sogar noch dadurch, daß die Bereifung 3 anteilmäßig das Kunststoffmaterial des Felgenkörpers 2 enthält. Hierdurch läßt sich eine überraschend hohe Tiefenverankerung erwirken. Das Mischungsverhältnis ist so, daß der Kautschukanteil nicht unter 50 % sinkt. Bei weichergestelltem Kautschuk liegt dessen Anteil bei bis zu 80 %.

Die mittlere Rauhungstiefe durch Erosion liegt bei 25 My. Eine mechanische Rauhung, die schon beim separaten Spritzen des Felgenkörpers mitberücksichtigt werden kann, liegt bei 7/10 mm Tiefe.

Das auf den vorgewärmten Felgenkörper 2 aufgespritzte,, die Bereifung bildende Material ist vorvulkanisierter thermoplastischer Kautschuk.

Die Lauffläche der Bereifung 3 kann glatt sein oder aber auch eine nicht näher dargestellte Profilierung aufweisen.

Alle in der Beschreibung erwähnten und in der Zeichnung dargestellten neuen Merkmale sind erfindungswesentlich, auch soweit sie in den Ansprüchen nicht ausdrücklich beansprucht sind.

## Ansprüche

1. Laufrad für Rollen, insbesondere Transportrollen von Betten, handverfahrbaren Wagen oder dergleichen, mit einem Felgenkörper aus Kunststoff und einer auf die oberflächenprofilierte Mantelfläche des Felgenkörpers unter Wärmeeinfluß aufgebrachten Bereifung aus thermoplastischem Kautschuk oder dergleichen, dadurch gekennzeichnet, daß die Bereifung (3) anteilmäßig das Kunststoffmaterial des Felgenkörpers (2) enthält und die Oberflächenprofilierung der Mantelfläche als Rauhung (R) gestaltet ist in einer Graduierung derart, daß die Kautschuk-Aufbring-Wärme Scheitelbereiche der Rauhigkeitserhebungen (10) anlöst.

2. Laufrad nach Anspruch 1, dadurch gekennzeichnet, daß die Rauhung (R) als querverlaufende Riefung gestaltet ist.

3. Verfahren zur Herstellung von Laufrädern gemäß Anspruch 1, dadurch gekennzeichnet, daß der Felgenkörper in auf etwa 80° vorgewärmtem Zustand in die Spritzform eingebracht ist.

0 255 592

# FIG.1

# FIG.2

0 255 592

# FIG.3

# FIG.4

## FIG. 5

## FIG. 6